# EUROPEAN PATENT APPLICATION

(11) **EP 2 533 184 A1**
(43) Date of publication of application: **12.12.2012**
(21) Application number: 11169162.2
(22) Date of filing: 08.06.2011
(51) Int. Cl.: G06Q 30/00

(54) **A system and method for selecting and providing content**

(71) Applicant: Research In Motion Limited, Waterloo, ON N2L 3W8 (CA)
(72) Inventor: Hymel, James Allen, Waterloo, Ontario N2L 3W8 (CA); Lindner, Jeffery Erhard, Los Gatos, CA California 95030 (US); Bouchard, Jean Philippe, Waterloo, Ontario N2L 3W8 (CA)
(74) Representative: Patel, Binesh

(57) **Abstract**

There is disclosed one or more methods, systems and components therefor for selecting information to be delivered for presentation by an electronic communication device. The operations of selecting are responsive to a plurality of criteria including attributes of a prior purchase associated with the electronic communication device. The information selected may comprise content reinforcing the prior purchase. An attribute of the prior purchase may comprise a purchase price. The operations of selecting may be configured to choose an amount or a quality level of the information which varies in proportion to an attribute of the prior purchase. One such attribute may be the purchase price. One such attribute may be a relative popularity of the prior purchase among consumers, product reviewers, etc.

## Description

### FIELD

The present matter relates to selecting and providing content, such as advertisements and other information, to a communication device.

### BACKGROUND

Communications devices are often used to deliver services and present information. Information can be presented in one or more formats such as an image, text, audio, video or a combination of two or more formats (e.g. audio and an image). The presentation of the information or the information itself may have associated attributes or parameters relating to quantity (e.g. amount, duration, screen size, etc.) and/or quality (e.g. audio, image or video quality parameters represented by parameters such as compression ratios, number of colours, stereo/mono sound, etc.). Often secondary information such as an advertisement is selected and presented in association with the delivery of a requested service and/or presentation of other requested (i.e. primary) information. Various factors may be utilized to select secondary information for presentation.

### SUMMARY

There is disclosed one or more methods, systems and components therefor for selecting information to be delivered for presentation by an electronic communication device. The operations of selecting are responsive to a plurality of criteria including attributes of a prior purchase associated with the electronic communication device. The information selected may comprise content reinforcing the prior purchase. An attribute of the prior purchase may comprise a purchase price. The operations of selecting may be configured to choose an amount or a quality level of the information which varies in proportion to an attribute of the prior purchase. One such attribute may be the purchase price. One such attribute may be a relative popularity of the prior purchase among consumers, product reviewers, etc.

According to an aspect, disclosed is a method of communicating information for presentation by an electronic communication device, the method comprising: receiving prior purchase data representing a prior purchase associated to the electronic communication device; selecting the information for presentation in response to one or more attributes of the prior purchase, the information comprising content reinforcing the prior purchase; and providing at least one of: the information or data identifying the information for communication to and presentation by the electronic communication device.

The step of selecting may operate to choose an amount or a quality level of the information which varies in proportion to a value of one or more attributes of the prior purchase. One of the attributes may comprise a purchase price. One of the attributes may comprise a relative popularity of the prior purchase. The method may comprise determining the relative popularity of the prior purchase.

The step of selecting may select a format of the information in proportion to a value of an attribute of the prior purchase.

The method may comprise mixing the information selected into other information to be presented by the electronic communication device. The information selected can be mixed to provide a video banner.

According to another aspect, there is disclosed is a computing device having a processor and memory, the memory storing instructions and data for execution by the processor to configure the computing device to perform the method aspect.

According to another aspect, there is disclosed a computer readable medium having computer readable code embodied therein for execution by a processor for configuring a computer to carry out the method aspect.

### BRIEF DESCRIPTION OF THE DRAWINGS

In order that the subject matter may be readily understood, embodiments are illustrated by way of examples in the accompanying drawings, in which:
**Figure 1** is a block diagram illustrating components of a communication device according to one embodiment;
**Figure 2** is a block diagram illustrating a telecommunication network according to one embodiment including a communication device of Figure 1; and
**Figure 3** is a schematic diagram illustrating a flow of different transactions over the telecommunication network of Figure 2..

For convenience, like numerals in the description refer to like structures in the drawings.

### DETAILED DESCRIPTION

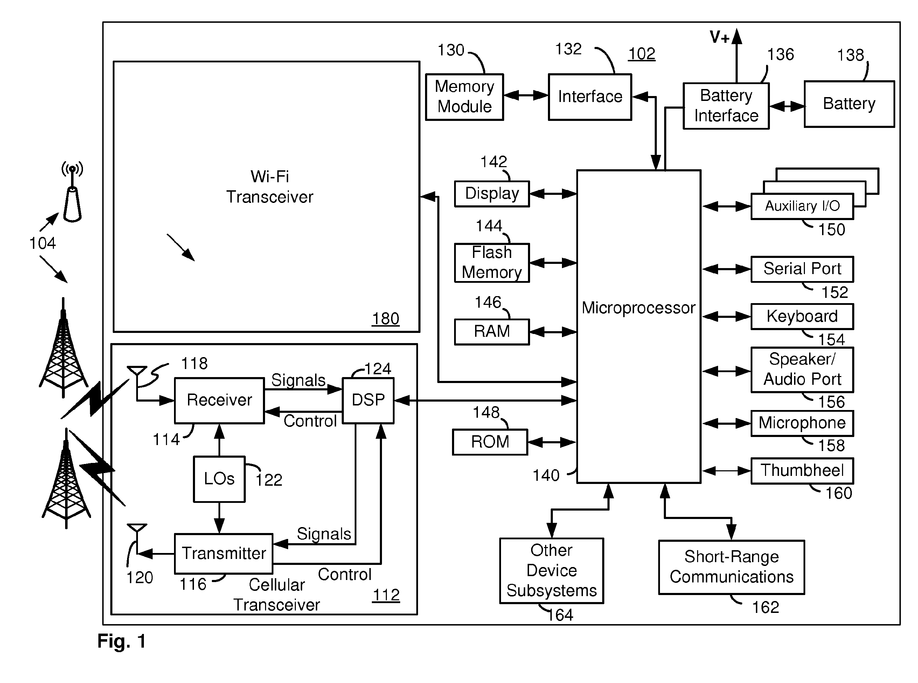

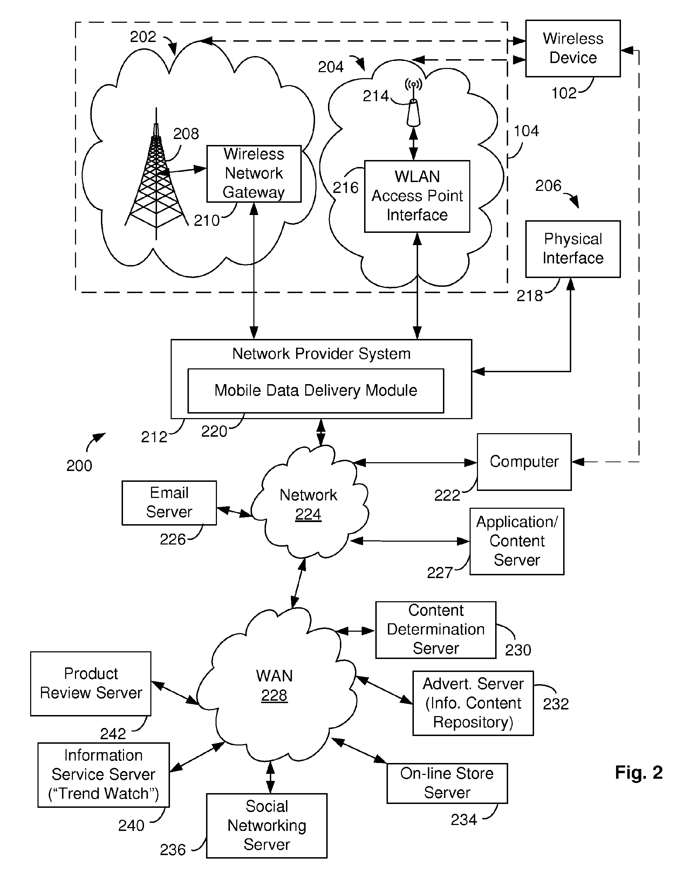

Reference is first made to FIG. 1, which shows a block diagram illustrating an electronic communication device 102 that is suitable for communicating for, receiving and presenting content in accordance with one aspect of the present disclosure. Device 102 communicates through a communication network 104 and is illustrated with wireless communication capabilities. Network 104 is also illustrated with wireless capabilities and includes antenna, base stations, and supporting radio equipment for supporting wireless communications between device 102 and other devices connected to network 104. Network 104 may be coupled to a network gateway and to a wide area network, shown in FIG. 2.

In one embodiment, device 102 is a two-way communication device having at least data and/or voice communication capabilities, including the capability to communicate with other computer systems. In one embodiment, device 102 is a handheld device. Depending on the functionality provided by device 102, it may be referred to as a data messaging device, a two-way pager, a cellular telephone with data messaging capabilities, a wireless Internet appliance, a data communication device (with or without telephony capabilities), a smart phone, personal digital assistant, or a portable media or music player. More generically, it may be referenced as a computing device. Device 102 may communicate with any one of a plurality of fixed transceiver stations within its geographic coverage area.

Device 102 may incorporate a one or more communication subsystems 112 and 180. Communication subsystem 112 comprises a receiver 114, a transmitter 116, and associated components, such as one or more antenna elements (118 and 120), local oscillators (LOs) 122, and a processing module such as a digital signal processor (DSP) 124. In one embodiment, antenna elements (118 and 120) may be embedded or internal to device 102. As will be apparent to those skilled in the field of communications, the particular design of the communication subsystem 112 depends on the network 104 in which device 102 is intended to operate.

Device 102 may send and receive communication signals over the network 104 after network registration or activation procedures have been completed. Signals received (e.g. by antenna elements 118) through network 104 are input to receiver 114, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in DSP 124. In a similar manner, signals to be transmitted are processed, including modulation and encoding, for example, by DSP 124. These DSP-processed signals are input to transmitter 116 for digital-to-analog (D/A) conversion, frequency up conversion, filtering, amplification, and transmission to the network 104 via antenna 120. DSP 124 processes communication signals and provides for receiver and transmitter control. For example, the gains applied to communication signals in receiver 114 and transmitter 116 may be adaptively controlled through automatic gain control algorithms implemented in DSP 124.

Network access (WAN) may be associated with a subscriber or user of device 102 via a memory module, such as a memory module 130, which may be a Subscriber Identity Module (SIM) card for use in a GSM network or a USIM card for use in a UMTS. The SIM card is inserted in or connected to an interface 132 of device 102 in order to operate in conjunction with network 104. Alternatively, device 102 may have an integrated identity module for use with systems such as Code Division Multiple Access (CDMA) systems. Device 102 may include a Wi-Fi transceiver 180 that may comprise similar components/chipsets to communication subsystem 112 adapted for one or more Wi-Fi protocols. Though Wi-Fi is shown, WiMAX is one alternative transceiver. In some embodiments, device 102 may be capable of Wi-Fi and WiMAX communications in accordance with software-defined radio ("cognizant radio") techniques.

Device 102 also includes a battery interface 136 for receiving one or more battery 138 which may be rechargeable. The one or more battery 138 provides electrical power to at least some of the electrical circuitry in device 102, and battery interface 136 provides a mechanical and electrical connection for the one or more battery 138. Battery interface 136 is coupled to a regulator (not shown) which provides power V+ to the circuitry of device 102.

Device 102 includes a programmable processor (e.g. microprocessor 140) which controls the overall operation of device 102. Communication functions, including at least data and voice communications, are performed through the communication subsystem 112. Microprocessor 140 also interacts with additional device subsystems such as a display 142, a flash memory 144, a random access memory (e.g. RAM 146), a read-only memory (e.g. ROM 148), auxiliary input/output (I/O) subsystems 150, a serial port 152 (e.g. Universal Serial Bus (USB)), a keyboard or keypad 154, a speaker or audio port 156 for connecting to, for example a set of headphones, a microphone 158, a clickable thumbwheel, trackball, optical or other touch based input pad, or set of scroll buttons, etc. 160, typically for scrolling/selecting input, a short-range communications subsystem 162, and any other device subsystems generally designated as 164. Some of the subsystems shown in FIG. 1 perform communication-related functions, whereas other subsystems may provide "resident" or on-device functions. Notably, some subsystems, such as keypad 154, display 142, and input device 160, for example, may be used for communication-related functions, such as entering a text message for transmission over network 104, and executing device-resident functions such as a calculator or task list. Operating system software used by the microprocessor 140 is preferably stored in a persistent store such as flash memory 144, which may alternatively be ROM 148 or similar storage element. Those skilled in the art will appreciate that the operating system, specific device applications, or parts thereof, may be temporarily loaded into a volatile store such as RAM 146.

The microprocessor 140, in addition to its operating system functions, enables execution of software applications on device 102. A predetermined set of applications that control basic device operations, including data and voice communication applications, will normally be installed on device 102 during or after manufacture. Device 102 may include a personal information manager (PIM) application having the ability to organize and manage data items relating to a user such as, but not limited to, instant messaging, email, calendar events, voice mails, appointments, and task items. One or more memory stores may be available on device 102 to facilitate storage of information, such as flash memory 144, RAM 146, ROM 148, memory module 130, or other types of memory storage devices or FLASH memory cards represented by other device subsystems 164, such as Secure Digital (SD) cards, mini SD cards, micro SD cards, etc.

Device 102 may be configured with a browser for interacting with Web pages. Device 102 may have one or more media related applications for displaying images, playing audio and or video files/streams, etc. The PIM, browser and/or media applications often have the ability to send and receive data items via either network 104 or a link to a computer system. The link to the computer system may be via serial port 152 or short-range communications subsystem 162. Additional applications may also be loaded onto device 102 through network 104, auxiliary I/O subsystem 150, serial port 152, short-range communications subsystem 162, or possibly, other device subsystems 164, and installed by a user in RAM 146 or a non-volatile store such as ROM 148 for execution by microprocessor 140. Such flexibility in application installation increases the functionality of device 102 and may provide enhanced on-device functions, communication-related functions, or both. For example, secure communication applications may enable electronic commerce functions and other such financial transactions to be performed using device 102.

In a data communication mode, a received data signal representing information such as a text message, an email message, a media file to be transferred, or Web page download will be processed by communication subsystem 112 and input to microprocessor 140. The microprocessor 140 will further process the signal for output to display 142 or alternatively to auxiliary I/O subsystem 150. A user of device 102 may also compose data items, such as email messages, for example, using keypad 154 and/or input device 160 in conjunction with display 142 and possibly auxiliary I/O subsystem150. Keypad 154 may be either a complete alphanumeric keypad or telephone-type keypad.

For voice communications, the overall operation of device 102 is similar, except that the received signals would be output to the speaker or audio port 156 and signals for transmission would be generated by a transducer such as microphone 158. Alternative voice or audio I/O subsystems, such as a voice message recording subsystem, may also be implemented on device 102. Although voice or audio signal output is typically accomplished primarily through the speaker or audio port 156, display 142 may also be used to provide an indication of the identity of a calling party, duration of a voice call, or other voice call related information.

Serial port 152 is often implemented (e.g. in a personal digital assistant (PDA) type communication device for which synchronization or other communication with a user's computer is a desirable, albeit optional, component). Serial port 152 enables a user to set preferences through an external device or software application and extends the capabilities of device 102 by providing for information, media file, or software downloads to or uploads from device 102 other than through network 104.

Short-range communications subsystem 162 is an additional optional component which provides for communication between device 102 and different systems or devices, which need not necessarily be similar devices. For example, short-range communications subsystem 162 may include an infrared device and associated circuits and components, or a wireless bus protocol compliant communication mechanism such as a Bluetooth™ communication module to provide for communication with similarly-enabled systems and devices (Bluetooth™ is a registered trademark of Bluetooth SIG, Inc.). In another embodiment, short-range communications subsystem 162 may be a wireless networking communications subsystem, conforming to IEEE 802.11 standards such as 802.11b, 802.11g, and/or 802.11 n.

Reference is next made to FIG. 2, which shows a communication system 200 suitable for use with device 102 shown in FIG. 1. Communication system 200 generally includes one or more devices 102 (one of which is shown in FIG. 2) and network 104. Network 104 may include a wireless Wide Area Network (WAN) 202, a Wireless Local Area Network (e.g. WLAN 204), and/or other interfaces 206 (which may not necessarily be wireless).

Referring to FIG. 2, WAN 202 may be implemented as a packet-based cellular or mobile network that includes a number of base stations 208 (one of which is shown in FIG. 2) where the base stations 208 provide wireless Radio Frequency (RF) coverage to a corresponding area or cell. WAN 202 is typically operated by a cellular network service provider that sells subscription packages to users of devices 102. WAN 202 comprises a number of different types of networks, for example, Mobitex Radio Network, DataTAC™, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution), UMTS (Universal Mobile Telecommunications Systems), Third Generation Partnership Project (3GPP or 3G), or Evolution-Data Optimized (EV-DO).

As shown in FIG. 2, the communications system 200 also includes a network gateway 210 and one or more network provider system 212. Network gateway 210 provides translation and routing services between the one or more network provider system 212 and WAN 202, which facilitates communication between devices 102 and other devices (not shown) connected, directly or indirectly, to network provider system 212.

WLAN 204 comprises a network which in some examples conforms to IEEE 802.11 standards such as 802.11 b, 802.11 g, and/or 802.11 n; however, other communications protocols may also be used for WLAN 204. WLAN 204 includes one or more wireless RF Access Points (AP) 214 (one of which is shown in FIG. 2) that collectively provide a WLAN coverage area. For the embodiment depicted in FIG. 2, WLAN 204 is operated by an enterprise (for example, a business or institution (e.g. university) in a building or campus type environment) and the access points 214 are connected to an access point interface 216. The access point interface 216 provides translation and routing services between the access points 214 and network provider system 212 to facilitate communication between two or more of devices 102 and other devices (e.g., such as desktop computers) connected, directly or indirectly, to network provider system 212. Access point interface 216 may be implemented using a computer, for example, a server running a suitable computer program or software.

According to one embodiment, the other interfaces 206 may be implemented using a physical interface 218. Physical interface 218 may include an Ethernet, Universal Serial Bus (USB), Firewire™, or infrared (IR) connection implemented to exchange information between network provider system 212 and device 102.

Network provider system 212 comprises a server or server modules or a number of servers or server modules which are typically located behind a firewall (not shown). Network provider system 212 may include a number of modules including a mobile data delivery module 220. Various modules running on network provider system 212 may be implemented as a number of services running on a single server or as a number of interconnected servers running a software program to implement the functionality of the respective module. Network provider system 212 provides access for devices 102, through either WAN 202, WLAN 204, or the other interfaces 206 connection to devices connected, for example, through an enterprise network 224 (e.g., an intranet), to network provider system 212. In one embodiment, mobile data delivery module 220 is implemented on a computer (server), such as network provider system 212.

Enterprise network 224 comprises a local area network, an intranet, the Internet, a direct connection, or combinations thereof. Enterprise network 224 may comprise an intranet for a corporation or other type of organization. In at least some embodiments, network provider system 212 is part of enterprise network 224, and is located behind a corporate firewall and connected to network gateway 210 through the Internet. A computer 222 (e.g., a workstation, desktop or laptop computer) for a user is typically connected to enterprise network 224. A user of device 102 may have access to enterprise network 224 and its services through computer 222. As described earlier, device 102 may be temporarily and directly connected to computer 222 for communication using, for example, serial port 152. This direct connection may make use of a cradle or docking station connected to a serial port of computer 222, where device 102 is placed in the cradle, therefore physically completing the serial connection between device 102 and computer 222. Alternatively, device 102 may communicate with computer 222 using communication subsystem 112 and WAN 202 and/or short-range communications subsystem 162 and WLAN 204.

As shown in FIG. 2, an enterprise-based application/content server 227 may be connected to enterprise network 224 and also to another network, for example, a Wide Area Network (e.g. WAN 228). In some embodiments application/content server 227 may be connected to network provider system 212 or to WAN 228. In some embodiments, an email server 226 and/or application/content server 227 form part of enterprise network 224. In the present embodiment, application/content server 227 comprises a PIM server that provides PIM-related data for devices registered with an enterprise such as device 102. The data may comprise one or more address books (not shown), and calendars, (not shown) for example. Email server 226 may provide electronic mail services for the enterprise and devices such as 102. Commonly available enterprise software for such PIM data is offered by Microsoft®, IBM Lotus®, Novell® and others. PIM data may be integrated with messaging (email) data and presented in a unified graphical user interface.

WAN 228 may further connect to other networks. WAN 228 may comprise or be configured with the Internet, a direct connection, a LAN, a wireless communication link, or any combination thereof. Content providers may provide content (information) via content servers, such as Web servers, connected to WAN 228, an example of which is shown in FIG. 2. One example is content determination server 230 for determining which content (information in various formats) is to be provided to device 102 using criteria etc, as described further below. Another is advertisement server 232, an information content repository, for storing secondary information such as advertisements and serving such information. Content determination server 230 may be configured to determine which of the information in advertising server 232 is to be provided to device 102. Content determination server 230 may be configured to determine how such selected information is to be provided to device 102.

A further example is an on-line store server 234 which may be configured for conducting e-commerce transactions (e.g. to purchase products and/or services) using communication devices such as device 102. On-line store server 234 may comprise one or more servers for providing content about products and services to purchase as well as to conduct on-line transactions, including gateways etc. to payment processing servers, etc. Products and services may comprise those delivered electronically as well as those delivered off-line.

A further example is social networking server 236 that provides social network services for subscribers or other users which may be accessible via devices such as device 102. Some social network services may include or link to communication or messaging services (e.g. micro-blogging, content sharing with other selected users ("friends")) games, e-commerce services, etc.

It is understood that any of device 102, computer 222, and servers (e.g. 226, 227, 230, 232, 234 and 236) can comprise user data. User data can comprise data which the user provides explicitly as well as data which pertains to a particular user and that is determined from user activities such as recent e-commerce or other transactions, social network activities, user contacts and friends, a carrier or other service provider or the device 102 itself (e.g. its type and capabilities), etc. For example, it may be determined from a user's activities that the user likes a type of music or other entertainment, that the user vacations yearly in a particular locale, that the user's friends recommend particular products or services.

User data may comprise purchase information for products or services purchased by a user of device 102 including attributes defining the specific product(s) or service(s) purchased and purchase prices therefor. These purchases may be made using device 102 (e.g. via an electronic wallet or other payment means on-line via device 102) or by other means and that are associated to the user of the device and, hence, device 102. For example, a user of device 102 may have one or more account(s) for purchasing such as a loyalty card, credit card, debit card, on-line payment account (e.g. PayPal®, etc.) or other payment method. The user may associate these accounts to device 102 or such association may be inferred or computed. Accounts may be used for on-line or off-line purchases, as applicable. Purchase data may be compiled by the services providing the accounts and the services (e.g. employing data privacy safeguards) may make the purchase data available with which to select information for presenting to the user such as via device 102.

Persons of ordinary skill in the art will appreciate that additional infrastructure may be employed in addition to the servers shown to provide their respective services and that FIG. 2 is simplified. It is also understood that a server can comprise one or more computing devices with programmable controllers, storage devices and software applications therefore (instructions and/or data), typically stored in a computer readable medium such as a memory or other storage device communicatively coupled to the server.

According to one embodiment, the mobile data delivery module 220 provides connectivity between WAN 202 and WLAN 204 and the other interfaces 206 connection and devices and/or networks connected directly or indirectly to network provider system 212. In one embodiment, the connectivity provided may be Hypertext Transfer Protocol (HTTP) based connectivity, pull / push based connectivity or broadcast based connectivity providing an Internet based service connection to devices connected to WAN 202, WLAN 204, or the other interfaces 206 connection and devices and/or networks connected directly or indirectly to network provider system 212. Enterprise network 224, application/content server 227, WAN 228, and the servers connected thereto are individually and/or collectively in various combinations a content source for network provider system 212.

It will be appreciated that the system shown in FIG. 2 comprises one possible communication network or configuration of a multitude of possible configurations for use with devices 102.

Device 102 may be configured to receive information via one or more delivery methods (manners of communication) including but not limited to voice, email, SMS, Instant Messaging (IM), HTTP via a browser (e.g. a Web page), media downloads with playback (e.g. via browser or native application), among others. Advertisements from advertising server 232 may be configured for delivery to device 102 via one or more respective manners of communication.

A particular advertisement may be associated with another communication directed to device 102. For example, an advertisement may be associated with a communication to download a media file, a visit to a Web page, a dialing of a telephone number, an email, etc. The advertisement may be received in this associated context and presented via device 102. For example, the advertisement may comprise a secondary video associated with another video (a primary video) requested to be downloaded. The secondary video may be presented before, during or after the presentation of the primary video. In some instances, the secondary information and primary information may be combined (mixed) into a single media file. In one embodiment, the secondary information may comprise a banner advertisement mixed with primary information such as a video (a video banner). In some embodiments, the secondary information and primary information need not be of the same type. That is, secondary information may comprise audio information and the primary information may comprise video information. The audio may be mixed into the audio track(s) of the video.

Information to be presented may vary in amount and quality level. For example, information may vary in presentation duration, screen size, audio volume or image/video quality among others. Selection operations may choose an amount and/or quality level in response to attributes of a prior purchase. An attribute may be purchase price of the prior purchase. An attribute may be relative popularity of the prior purchase such as defined by social media buzz/topic trending, etc. The popularity may be defined from "friends" of a user, independent product reviews, general public or combinations thereof. For example, quality level in the form of the content format may be selected in response to a purchase price scale: image -> audio -> video in proportion to the price scale. Content format selected may comprise an image for a relatively low purchase price and a video for a relatively high price. It is understood that the attributes (e.g. relative popularity or purchase price) may be quantified and represented as data by an applicable value.

Selecting which information to present based upon a prior purchase is not limited to an immediate past purchase. A user may have purchased an item many months ago. At least some of the content of the information selected to be presented provides an assurance to the purchaser that the purchase was a good one. The purchase of books provides an example. The content of the information may comprise an endorsement of the choice and a thanks. A noted book promoter of daytime TV fame may verbalize a thanks or other encouragement, possibly an encouragement to share the book or to share thoughts on the book (purchase) via social networking (e.g. micro-blogging) thereby to build social buzz or trending. The format of the content may be audio only, audio image or a video. For example, assume the book purchase was made via an on-line bookstore. Upon return of the user to the on-line store, an advertisement (secondary information) may be "personally" selected for inclusion in a Web page served by the on-line store. The advertisement may be an audio file played while the page is in a user's browser "Thanks for choosing Book X. Tell us what you think in our review section, click .."). The secondary information may be audio and an image such as a picture of the book, the author or an endorser. The secondary information may be a video (e.g. a short sequence of the endorser endorsing the book). The selection of which secondary information to present may be responsive to the relative popularity of the purchased product or purchase price.

Activity in the purchaser's social networks such as the product's trending (whether good or bad) may influence the content selected. Other web/social media trending, and not just the user's feeds, could also be a source for trends. A trend watch service could be used to watch a user's purchase for popularity etc to drive post purchase content: "The Brand handbag you bought at *H&M*® is FashionBlogger's pick of the week, great choice."

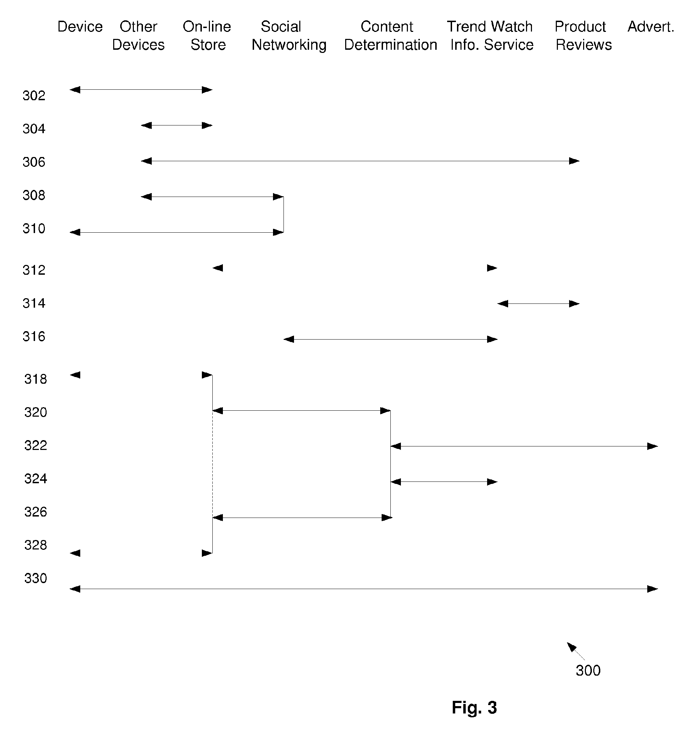

FIG. 3 illustrates schematically a plurality of information flows 300 between components of the communication system 200 of FIG. 2. The information flows represent exchanges of information in accordance with examples to illustrate aspects of the selecting and providing of information to device 102. Flow 302 represents a simplified e-commerce transaction between device 102 and on-line store server 234. A product or service is purchased and defines a prior purchase with a purchase price. Though not shown on-line store server 234 compiles this purchase data (user data) for later use for selecting information to be presented. Flow 304 represents visits by one or more other electronic devices to on-line store server 234. These visits may represent e-commerce transactions to purchase the same or different products/services, write reviews, browse pages, etc. Flow 306 represents the posting of product reviews to product review server 242. These reviews may represent independent reviews (by testing houses, journalists etc.), reviews from the general public (consumer reviews), etc. Product review server 242 may be a Web site for an information service. The information service may be a general micro-blogging service (e.g. Twitter®) or one dedicated to product/service discussion on selected topics, a general information service such as an on-line publication (C-NET®, etc.)

Flow 308-310 represents social networking interaction with social networking server 236 such as exchanges of information between friends. The information exchanged may reference prior purchases, recommendations, etc.

Flows 312, 314 and 316 represent activities by or with Trend Watch Information server 240. This service may receive product review information (e.g. by crawling sites or through other information exchange) and perform statistical and other analysis to define trends and social media buzz ( relative popularity) of specific topics and/or products and services. These trends or popularity assessments are typically associated to respective time periods for currency.

Flows 318 to 328 represent an example of a transaction in which content is selected and provided for presentation by device 102. In the example, the triggering event is a return visit to the on-line store server 234 by device 102. On-line store web page is configured to deliver secondary content (an advertisement) in the Web page. On-line store server 234 provides prior purchase data (e.g. without user identifying data) to content determination server 230. The prior purchase data may comprise data identifying the prior product purchases and purchase price. Content determination server 230 may interact with advertising server 232 to determine which content is available. Content determination server 230 may interact with trend watch service 240 to determine trend data. Content determination server 230 using one or more of purchase price and trend data selects one or more advertisements for on-line store server 234. At least some of the content of the advertisement selected comprises content reinforcing the prior purchase. The amount and quality level of the information selected may vary in accordance with one or more of the respective price and trend data. It is understood that either or both of flows 322 and 324 may be undertaken in different order and may be performed prior to receipt of interaction with the on-line store server 234. Flow 326 may represent the providing of data (e.g. XML, URL, etc.) to identify the information within advertising server 232 rather than the information itself. On-line store server 234 may configure the Web page for providing to device 102 and a browser of such device102 may request the selected information from advertising server 232 (Flow 330) and present same. In other embodiments, content determination server 230 may receive popularity data from on-line store server 234.

Persons of skill in the art will appreciate that other examples of opportunities to select content for providing to device 102 may be contemplated. For example, on-line store server 234 may represent a media download (e.g. video) store service to stream video. Content selected may be mixed into the stream provided to device 102. The prior purchase information may be obtained from an account associated to the user such as a loyalty program, payment card etc.

The secondary information may be delivered in other manners such as email. A user my subscribe to receive email (from an on-line store, price watch service, etc). for new product announcements, sales etc. Prior purchases made through the store or other service may be used as a basis for selecting at lest some of the content of such emails as discussed, varying the amount and/or quality level of the information selected in response to purchase price and/or buzz. The content may reinforce the prior purchase. The trigger for sending the email may be an event such as the initiation of a sale, drop in a monitored product's purchase price, passing of a period of time (e.g. weekly email etc.).

One or more embodiments have been described by way of example. It will be apparent to persons skilled in the art that a number of variations and modifications can be made without departing from the scope of what is defined in the claims.

## Claims

1. A method of communicating information for presentation by an electronic communication device (102), the method comprising:
receiving (320) prior purchase data representing a prior purchase (302) associated to the electronic communication device;
selecting (322) the information for presentation in response to one or more attributes of the prior purchase, the information comprising content reinforcing the prior purchase; and
providing (326, 328) at least one of: the information or data identifying the information for communication to and presentation by the electronic communication device.

2. The method of claim 1 wherein the step of selecting operates to choose an amount or a quality level of the information which varies in proportion to a value of one or more attributes of the prior purchase.

3. The method of claim 2 wherein one of the attributes comprises a purchase price.

4. The method of claim 2 or claim 3 wherein one of the attributes comprises a relative popularity of the prior purchase.

5. The method of claim 4 comprising determining (324) the relative popularity of the prior purchase.

6. The method of any preceding claim wherein the step of selecting selects a format of the information in proportion to a value of an attribute of the prior purchase.

7. The method of any preceding claim comprising mixing the information selected into other information to be presented by the electronic communication device.

8. The method of claim 7 wherein the information selected is mixed to provide a video banner.

9. A computing device having a processor and memory, the memory storing instructions and data for execution by the processor to configure the computing device to perform a method of any one of claims 1 to 8.

10. A computer readable medium having computer readable code embodied therein for execution by a processor for configuring a computer to carry out a method in accordance with any one of claims 1 to 8.

## Amended claims

### Amended claims in accordance with Rule 137(2) EPC.

**1.** A method of communicating information for presentation by an electronic communication device (102), the method comprising:
receiving (320) at a content determination server (230) prior purchase data representing a prior purchase (302) associated to the electronic communication device;
selecting (322) by the content determination server (230) the information for presentation in response to one or more attributes of the prior purchase, the information comprising content reinforcing the prior purchase; and
providing (326, 328) at least one of: the information or data identifying the information for communication to and presentation by the electronic communication device.

**2.** The method of claim 1 wherein the step of selecting operates to choose an amount or a quality level of the information which varies in proportion to a value of one or more attributes of the prior purchase.

**3.** The method of claim 2 wherein one of the attributes comprises a purchase price.

**4.** The method of claim 2 or claim 3 wherein one of the attributes comprises a relative popularity of the prior purchase.

**5.** The method of claim 4 comprising determining (324) the relative popularity of the prior purchase.

**6.** The method of any preceding claim wherein the step of selecting selects a format of the information in proportion to a value of an attribute of the prior purchase.

**7.** The method of any preceding claim comprising mixing the information selected into other information to be presented by the electronic communication device.

**8.** The method of claim 7 wherein the information selected is mixed to provide a video banner.

**9.** A computing device having a processor and memory, the memory storing instructions and data for execution by the processor to configure the computing device to perform a method of any one of claims 1 to 8.

**10.** A computer readable medium having computer readable code embodied therein for execution by a processor for configuring a computer to carry out a method in accordance with any one of claims 1 to 8.
